Europäisches Patentamt

European Patent Office

Office européen des brevets

(11) Publication number: **0 039 386**
**B1**

(12) **EUROPEAN PATENT SPECIFICATION**

(45) Date of publication of patent specification: **23.07.86**

(21) Application number: **81100828.3**

(22) Date of filing: **05.02.81**

(51) Int. Cl.⁴: **B 25 B 27/00, B 29 C 37/00,**
**F 16 J 15/00**

(54) **Quick release seal retainer.**

(30) Priority: **12.03.80 PCT/US80/00271**

(43) Date of publication of application:
**11.11.81 Bulletin 81/45**

(45) Publication of the grant of the patent:
**23.07.86 Bulletin 86/30**

(84) Designated Contracting States:
**DE FR GB IT**

(56) References cited:
**GB-A-1 555 880**
**NL-A-7 112 317**
**US-A-1 786 291**
**US-A-1 875 816**
**US-A-2 506 375**
**US-A-2 714 225**

**U.S. PATENT OFFICE - OFFICIAL GAZETTE,
17th April 1917, pages 825-826;**

(73) Proprietor: **CATERPILLAR TRACTOR CO.**
**100 Northeast Adams Street**
**Peoria Illinois 61629 (US)**

(72) Inventor: **Becker, Danny Joe**
**10231 N. Spring Lane**
**Peoria Illinois 61615 (US)**
Inventor: **Koch, Keith Elton**
**315 S. Chestnut**
**Tremont Illinois 61568 (US)**
Inventor: **Satzler, Ronald Lee**
**315 Sumner Drive**
**Princeville Illinois 61559 (US)**

(74) Representative: **Wagner, Karl H.**
**WAGNER & GEYER Patentanwälte**
**Gewuerzmuehlstrasse 5 Postfach 246**
**D-8000 München 22 (DE)**

## Description

This invention relates to seal retainers and more particularly to a quick release seal retainer which permits rapid replacement of worn or damaged seal segments.

The basic track belt disclosed in U.S. Patent No. 3,899,220 issued to Grawey et al on August 12, 1975 is cured in a curing mold disclosed in Great Britain Patent 1,555,880 published November 14, 1979. Basically the curing mold includes a plurality of inner mold segments which move radially outwardly to form the inside surface of the track belt and a plurality of outer mold segments which move radially inwardly to form the outside surface of the track belt. The uncured rubber making up the track belt is compressed between the inner and outer segments which are heated to about 200° to 220° centigrade for curing the rubber and causing the rubber to bond to the integral anchor plates and reinforcing cable within the track belt. Inner segmented seals are carried by upper and lower rings and cooperate with outer seal elements carried by the outer mold segments for preventing the rubber in the track belt from extruding from between the inner and outer segments. Each of the inner seal segments has a projection for sealingly engaging a mating surface of the respective outer mold segment. A depression is formed between adjacent projections and cooperates with a depression in the respective outer seal element for sealingly embracing a portion of the anchor plate extending axially outwardly from the track belt. Each of the outer seal elements has a pair of relatively narrow protrusions on the opposite side of the depression for sealing against the side of the projections of the inner seal segments. The inner seal segments and outer seal elements are secured to the respective upper and lower rings and outer mold segments by plates bolted thereto.

U.S.—A—2 506 375 discloses a vulcanizing machine having a clamp member and means for locking the clamp member in a first position and for moving the clamp member between first and second positions. However, it is not readily apparent how such mechanism could be utilized as a mechanism for quickly and efficiently changing segmented seals of the track belt curing mold described above.

One of the problems encountered with the belt curing mold is that replacement of the outer seal elements cause considerable down time of the curing mold and a waste of energy since it is necessary to let the curing mold cool down from the operating temperature before a mechanic can work on the mold. Of course, once the curing mold has cooled down and the seal element replaced, it is necessary to bring the curing mold back up to operating temperature before the next track belt can be cured. The replacement problem is compounded because the life of the outer seal elements has not been satisfactory thereby causing more frequent replacement. The short life of the outer seal element is attributed to the design of the seal arrangement and particularly the relatively narrow protrusions which tend to be deformed or break easily if the seal element is even slightly misaligned from the anchor plate.

The present invention is directed to overcoming one or more of the problems as set forth above.

In one aspect of the present invention a quick release seal retainer adapted for connecting a seal segment to a base as set forth in the precharacterizing part of claim 1 is characterized by the features of the characterizing part of claim 1. Preferred embodiments of the invention are claimed in the dependent claims.

The problem of replacing worn or damaged outer seal segments in a curing mold is overcome by use of the quick release seal retainer. Actuation of the quick release seal retainer releases the old seal segment so that it can be removed and replaced with a new seal segment. The quick release seal retainer is again actuated to lock the new seal segment in place. The quick release seal retainer can be actuated and the seal segment replaced while the curing mold is at its operating temperature by a mechanic wearing insulated gloves.

Brief Description of the Drawings

Fig. 1 is a diagrammatic partial view of an embodiment of the present invention.

Fig. 2 is a sectional view taken along line II—II of Fig. 1.

Fig. 3 is an elevational view as viewed along line III—III of Fig. 2.

Fig. 4 is a partial plan view of the seal arrangement.

Fig. 5 is a sectional view taken along line V—V of Fig. 1.

Fig. 6 is an elevational view of a tool for actuation of a lower quick release seal retainer.

Best Mode For Carrying Out the Invention

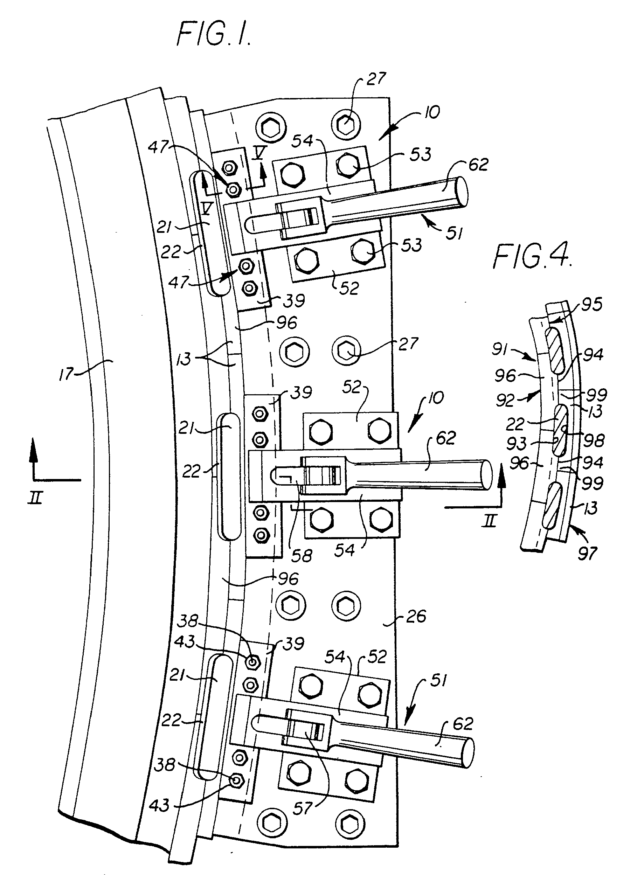

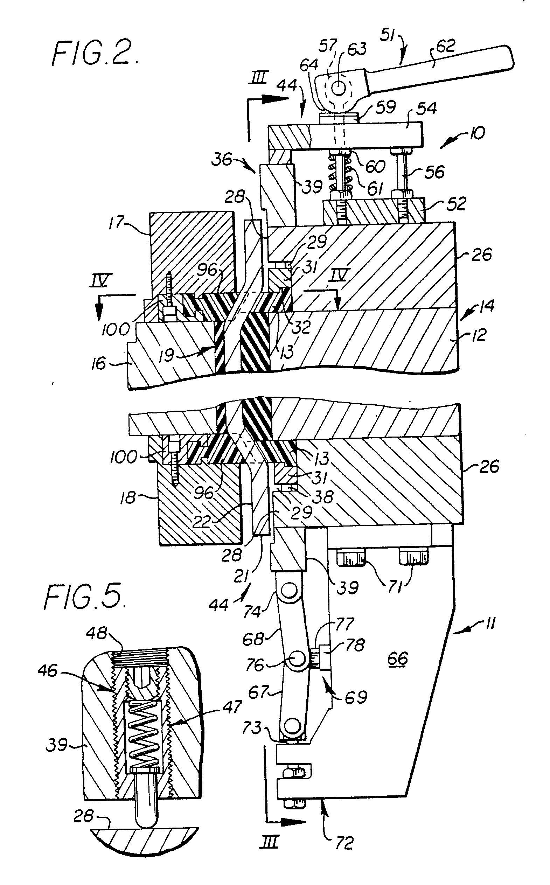

Referring now to Figs 1 and 2 of the drawings first and second quick release seal retainers 10, 11 are shown mounted to opposite ends of a base 12 for clamping a seal segment 13 to the base. The base 12 can be, for example, an outer mold segment of a track belt curing mold generally indicated by the reference numeral 14 and which also includes an inner mold segment 16, an upper seal ring 17 and a lower seal ring 18. Since the curing mold 14 per se forms no part of the present invention it will suffice to state that the inner mold segment 16 can move leftwardly as viewed in Fig. 2 from the position shown and is only one of a plurality of inner mold segments which form the inner cylindrical surface of a workpiece, for example a track belt 19. The outer mold segment or base 12 can move rightwardly from the position shown in Fig. 2 and likewise is only one of a plurality of outer mold segments which form the outer surface of the track belt 19. The upper seal ring 17 can move upwardly from the position shown and away from the inner mold segment 16. A complete disclosure of the track belt curing

2

mold 14 can be found in Great Britain Patent No. 1,555,880.

The track belt 19 includes as an integral part thereof a plurality of anchor plates 21 having end portions 22 extending axially outwardly from the axial edge of the track belt 19.

Each of the quick release seal retainers 10, 11 has a mounting block 26 connected to the end of the base 12 by a plurality of bolts 27. A projection 28 extends outwardly above the base 12 defining a slot 29 between the base 12 and the projection 28. A clamp member 31 is positioned within the slot and has a stepped surface 32 mating with a mating surface of the seal segment 13.

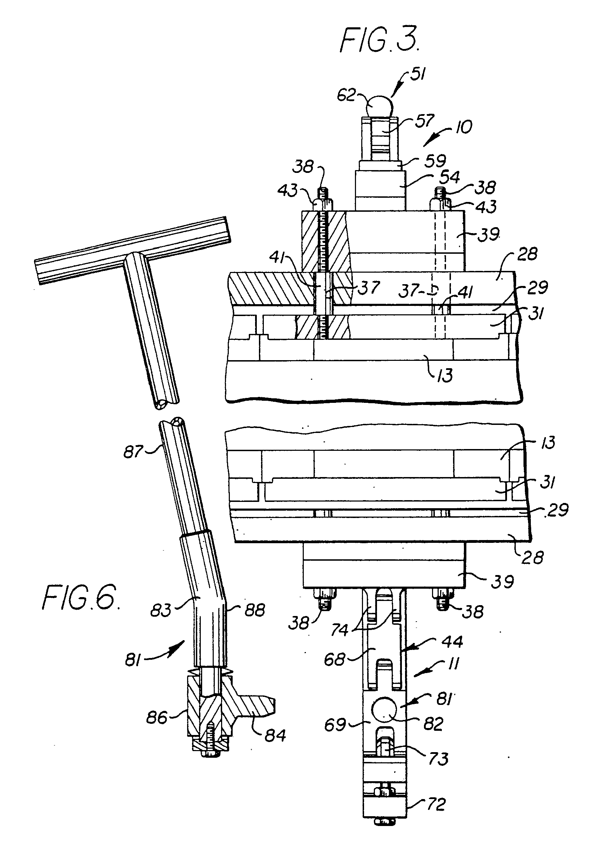

A means 36 is provided for slidably connecting the clamp member 31 to the projection 28 for rectilinear movement of the clamp member 31 between a first position at which the seal segment 13 is clamped between the clamp member 31 and the base 12 and a second position at which the seal segment 13 is released. As shown in Fig. 3 the means 36 can be, for example, a pair of bores 37 extending through the projection 28, a pair of studs 38 and a bar 39. Each of the studs 38 has an enlarged portion 41 slidably positioned within the respective bores 37. One end of each stud is threadably connected to the clamp member 31 while the opposite end portion is connected to the bar 39 by a nut 43.

A means 44 is provided for quickly locking the connecting means 36 and hence the clamp member 31 at the first position and for moving the clamp member 31 between the first and second positions. As shown in Fig. 5 the locking and moving means 44 includes means 46 for resiliently urging the clamp member 31 from the first position to the second position. The resilient urging means 46 can include, for example, a pair of spring plungers 47 each threadably seated in a threaded bore 48 in the bar 39 and reacting against the projection 28 of the mounting block 26.

The locking and moving means 44 of the first quick release seal retainer 10 also includes a cam clamp mechanism 51 connected to a plate 52 connected to the mounting block 26 by a plurality of bolts 53. The cam clamp mechanism 51 includes a member 54 having one end in engagement with the bar 39 and the other end seated on a post 56 extending upwardly from the plate 52. An eye bolt 57 extends through a slot 58, Fig. 1, in the member 54, a pair of washers 59, 60 positioned on opposite sides of the member 54, a spring 61 and is threadably connected to the plate 52. A cam actuator 62 is pivotally connected at a pivot 63 to the eye bolt 57 and has a cam surface 64 in engagement with the washer 59. The post 56 acts as a fulcrum for the member 54 with the cam actuator 62 being of a construction sufficient for urging the end of the member 54 in engagement with the bar 39 toward the projection 28 in response to clockwise rotation of the cam actuator 62 as viewed in Fig. 2.

The locking and moving means 44 of the second quick release seal retainer 11 includes a bracket 66, first and second toggle links 67, 68, and a stop means 69. The bracket is connected to the lower mounting block 26 by a plurality of bolts 71. The first toggle link 67 has one end pivotally connected to an eye bolt 73 adjustably connected to a lower end 72 of the bracket 66. The second toggle link has one end pivotally connected to a clevis 74 connected to the bar 39. The other end of the second toggle link 68 is pivotally connected at pivot 76 to the other end of the first toggle link 67. The stop means 69 can be a bolt 77 threadably connected to the bracket 66 and extending through a spacer 78. The first and second toggle links 67, 68 are movable between a first position (the pivot 76 positioned left of the position shown in Fig. 2) at which both of the links are free from engagement with the stop means 69 and the seal segment 13 is released from the base 12 and a second position at which the end of the first toggle link 67 is in engagement with the stop means 69 and the seal segment 13 is clamped between the clamp member 31 and the base 12. The first and second toggle links 67, 68 pass through a straight line condition in response to being moved between the first and second positions. Thus, an over-center type toggle action is provided such that with the first toggle link 67 being in engagement with the bolt 71, the bar 39 and thus the clamp member 31 are mechanically locked at the second position of the clamp member 31.

Referring now to Figs. 3 and 6, a means 81 is provided for pivoting the first and second toggle links 67, 68 between the first and second positions. The pivoting means 81 can be for example a hole 82, Fig. 3, in the first toggle link 67 and a tool 83, Fig. 6, having a tang 84 adapted to slidably fit within the hole 82. The tang 84 extends outwardly from a head 86 which has a handle 87 rotatably connected to the head 86. Preferably the handle 87 has a bend 88 formed therein for a later defined purpose.

Referring to Fig. 4, the seal segment 13 is a part of a seal assembly 91 adapted for sealing against the ends of the track belt 19 and for sealingly embracing the end portion 22 of the anchor plates 21 extending from the axial end of the track belt 19.

The seal assembly has an inner annular seal 92 having a plurality of alternate cutouts 93 and projections 94 formed at the outer periphery 95. The cutouts 93 are preferably of a size sufficient for intimately receiving the end portion 22 with the projections 94 extending radially between the end portions 22 and terminate at the median of the end portions. The inner annular seal 92 is preferably made up of a plurality of inner seal segments 96 positioned in end-to-end relationship. As shown in Fig. 2, the inner seal segments 96 are clamped to the respective upper and lower seal ring 17, 18 by a retainer element 100.

An outer seal 97 is made up of a plurality of the outer seal segments 13 positioned in end-to-end relationship. Each of the outer seal segments 13 has a cutout 98 positioned between opposite end portions 99. The cutouts 98 are preferably of a size sufficient for intimately receiving the outer portion of the end portion 22. The end portions 99 are in sealing engagement with the projections 94 of the inner seal 92.

Industrial Applicability

In use the upper seal segment 13 can be released simply by pivoting the cam actuator 62 about pivot 63 to relieve the camming action on the member 54. This releases the bar 39 allowing the spring plungers 47 to resiliently move the bar 39 and hence the clamp member 31 from the first position to the second position. The old seal segment 13 is then easily removed and a new seal segment 13 installed. The cam actuator is then pivoted in the opposite direction causing the member 54 to move the bar 39 and hence the clamp member 31 to the first position locking the seal segment 13 in place.

The lower seal segment 13 can be quickly replaced by actuation of the second quick release seal retainer 11. Specifically, the tang 84 of the tool 83 is inserted into the hole 82 in the first toggle link 67. The tool 83 is then pivoted to move the first and second toggle links 67, 68 from the second position to the first position. Due to the limited space between the inner mold segment 16 and the outer mold segment or base 12 the handle 87 of the tool 83 is rotated relative to the head 86 to utilize the effect of the bend 88 in the handle 87 to obtain additional pivotal movement of the outer end of the handle 87 in order to obtain sufficient movement of the first and second toggle links 67, 68 to release the seal segment 13. After the old seal segment 13 has been replaced with a new seal segment 13 the above operation is reversed to lock the new seal segment in place.

From the foregoing it is readily apparent that both the first and second quick release seal retainers 10, 11 provide for the rapid replacement of the respective upper or lower seal segment 13. Both of the quick release seal retainers can be actuated by the mechanic even though he may be wearing heavy insulated gloves so that the seal segments can be replaced when the mold is at its relatively high operating temperature.

## Claims

1. A quick release seal retainer (10, 11) adapted for connecting a seal segment (13) to a base (12) and having a clamp member (31) movable relative to the base and means (44) for quickly locking the clamp member (31) at a first position and for moving the clamp member (31) between the first position and a second position characterized by:
a mounting block (26) connected to the base (12) and having a projection (28) extending outwardly above the base (12) defining a slot (29) between the base (12) and the projection (28), said clamp member (31) being positioned within the slot (29);
means (36) for slidably connecting the clamp member (31) to the projection (28) of the mounting block (26) for rectilinear movement of the clamp member (31) between the first position at which the seal segment (13) is clamped between the clamp member (31) and the base (12) and the second position at which the seal segment (13) is released; and
said locking and moving means (44) being operatively connected to said connecting means (36).

2. The quick release seal retainer (10, 11) of claim 1 wherein said connecting means (36) includes a bore (37) extending through the projection (28), a stud (38) slidably positioned within the bore (37) and having one end connected to the clamp member (31), and a bar (39) connected to the other end of the stud (38).

3. The quick release retainer (10, 11) of claim 1 or 2 wherein said locking and moving means (44) includes means (46) for resiliently urging the clamp member (31) from the first position to the second position.

4. The quick release seal retainer of claim 3 wherein said resilient urging means (46) includes a spring mechanism (47) connected to the bar (39) and reacting against the projection (28) of the mounting block (26).

5. The quick release retainer (11) of any of claims 1—4 wherein said locking and moving means includes a bracket (66) connected to the mounting block (26), a first toggle link (67) having one end pivotally connected to the bracket (66), a second toggle link (68) having one end pivotally connected to the bar (39) and its other end pivotally connected to the other end of the first toggle link (67), and stop means (69) connected to the bracket (66) for engagement by one (67) of the first and second toggle links (67, 68).

6. The quick release seal retainer (11) of any of claims 1—5 wherein said first and second toggle links (67, 68) are movable between the first position at which both of the toggle links (67, 68) are free from engagement with the stop means (69) and the seal segment (13) is released from the base (12) and a second position at which said one (67) of the first and second toggle links (67, 68) is in engagement with the stop means (69) and the seal segment (13) is clamped between the clamp member (31) and the base (12), said first and second toggle links (67, 68) passing through a straight line condition in response to being moved between the first and second positions.

7. The quick release seal retainer (11) of claim 6 including means (81) for pivoting the first and second toggle links (67, 68) between the first and second positions, said means (81) including a hole (82) in the first link (69), and a tool (83) having a tang (84) adapted to slidably fit within the hole (82).

8. The quick release seal retainer (11) of any of claims 1—7 wherein said tool (83) has a head (86), and a handle (87) rotatably connected to the head (86), said tang (84) extending outwardly from said head (86).

9. The quick release seal retainer (10) of any of claims 1—8 wherein said locking and moving means (44) includes a cam clamp mechanism (51) connected to the mounting block (12) and having a member (54) adapted for engagement with the bar (39) of the connecting means (36).

**Patentansprüche**

1. Schnell lösbarer Dichtungshalter (10, 11) geeignet zur Verbindung eines Dichtsegments (13) mit einer Basis (12) und mit einem Klemmglied (31) beweglich bezüglich der Basis und Mittel (44) zur schnellen Verriegelung des Klemmglieds (31) in einer ersten Position und zur Bewegung des Klemmglieds (31) zwischen der ersten Position und einer zweiten Position, gekennzeichnet durch einen Befestigungsblock (26) verbunden mit der Basis (12) und mit einem Vorsprung (28), der sich nach außen über die Basis (12) erstreckt und einen Schlitz (29) zwischen der Basis (12) und dem Vorsprung (28) definiert, wobei das Klemmglied (31) innerhalb des Schlitzes (29) positioniert ist,

Mittel (36) zur Gleitverbindung des Klemmglieds (31) mit dem Vorsprung (28) des Befestigungsblocks (26) zur gradlinigen Bewegung des Klemmglieds (31) zwischen der ersten Position, in der das Dichtsegment (13) zwischen dem Klemmglied (31) und der Basis (12) festgeklemmt ist und der zweiten Position in der das Dichtsegment (13) freigegeben ist,

wobei die Verriegelungs- und Bewegungsmittel (44) betriebsmäßig mit den Verbindungsmitteln (36) verbunden sind.

2. Schnell lösbarer Dichtungshalter (10, 11) nach Anspruch 1, wobei die Verbindungsmittel (36) eine Bohrung (37) aufweisen, die sich durch den Vorsprung (28) erstreckt, einen Stummel (38) gleitend positioniert innerhalb der Bohrung (37), und wobei ein Ende mit dem Klemmglied (31) verbunden ist und mit einer Stange (39) verbunden mit dem anderen Ende des Stummels (38).

3. Schnell lösbarer Dichtungshalter (10, 11) nach Anspruch 1 oder 2, wobei die Verriegelungs- und Bewegungsmittel (44) Mittel (46) aufweisen zum elastischen Drücken des Klemmglieds (31) aus der ersten Position in die zweite Position.

4. Schnell lösbarer Dichtungshalter nach Anspruch 3, wobei die elastischen Druckmittel (46) einen Federmechanismus (47) aufweisen und mit der Stange (39) verbunden sind und gegen den Vorsprung (28) des Befestigungsblocks (26) wirken.

5. Schnell lösbarer Dichtungshalter (11) nach einem der Ansprüche 1 bis 4, wobei die Verriegelungs- und Bewegungsmittel einen Bügel (66) aufweisen verbunden mit dem Befestigungsblock (26), ein erstes Kippgelenk (67), von dem ein Ende schwenkbar mit dem Bügel (66) verbunden ist, ein zweites Kippgelenk (68), von dem ein Ende schwenkbar mit der Stange (39) verbunden ist, während das andere Ende schwenkbar mit dem anderen Ende des ersten Kippgelenks (67) verbunden ist und Anschlagmittel (69) verbunden mit dem Bügel (66) zum Eingriff mit einem (67) der ersten und zweiten Kippgelenke (67, 68).

6. Schnell lösbarer Dichtungshalter (11) nach einem der vorhergehenden Ansprüche 1 bis 5, wobei die ersten und zweiten Kippgelenke (67, 68) zwischen einer ersten Position und einer zweiten Position bewegbar sind, wobei in der ersten Position die beiden Kippgelenke (67, 68) frei gegenüber Eingriff mit den Anschlagmitteln (69) sind und das Dichtsegment (13) gegenüber der Basis (12) freigegeben ist, und wobei in der zweiten Position das erwähnte eine (67) der ersten und zweiten Kippgelenke (67, 68) in Eingriff mit den Anschlagmitteln (69) steht und das Dichtsegment (13) zwischen dem Klemmglied (31) und der Basis (12) festgeklemmt ist, wobei die ersten und zweiten Kippgelenke (67, 68) infolge der Bewegung zwischen den ersten und zweiten Positionen durch einen Geradlinigkeitszustand laufen.

7. Schnell lösbarer Dichtungshalter (11) nach Anspruch 6 mit Mitteln (81) zum Verschwenken der ersten und zweiten Kippgelenke (67, 68) zwischen den ersten und zweiten Positionen, wobei die Mittel (81) ein Loch (82) im ersten Gelenk (69) aufweisen und wobei ein Werkzeug (83) mit einem Ansatz (84) vorgesehen ist, geeignet zur Gleitpassung in das Loch (82).

8. Schnell lösbarer Dichtungshalter (11) nach einem der Ansprüche 1 bis 7, wobei das Werkzeug (83) einen Kopf (86) aufweist und einen Handgriff (87) drehbar verbunden mit dem Kopf (86), wobei der Ansatz (84) sich nach außen von dem Kopf (86) erstreckt.

9. Schnell lösbarer Dichtungshalter (10) nach einem der Ansprüche 1 bis 8, wobei die Verriegelungs- und Bewegungsmittel (44) einen Nockenklemmechanismus (51) aufweisen, und zwar verbunden mit dem Befestigungsblock (12) und mit einem Glied (54) geeignet zum Eingriff mit der Stange (39) der Verbindungsmittel (36).

**Revendications**

1. Dispositif de retenue de joint à démontage rapide (10, 11) adapté pour relier un segment de joint (13) à un socle (12) et pourvu d'un organe de serrage (31) mobile par rapport au socle et d'un mécanisme (44) pour le blocage rapide de l'organe de serrage (31) dans une première position et déplacer l'organe de serrage (31) entre la première position et une seconde position, caractérisé par:

un bloc de montage (26) relié au socle (12) et dont une projection (28) s'étend vers l'extérieur au-dessus du socle (12) formant une gorge (29) entre le socle (12) et la projection (28), ledit organe de serrage (31) étant positionné dans la gorge (29);

un dispositif (36) pour le raccordement par coulissement d'un organe de serrage (31) avec une projection (28) du bloc de montage (26) en vue d'assurer un mouvement rectiligne de l'organe de blocage (31) entre la première position dans laquelle le segment de joint (13) est serré entre l'organe de serrage (31) et le socle (12), et la seconde position dans laquelle le segment de joint (13) est desserré; et

ledit mécanisme de blocage et de déplacement (44) étant relié fonctionnellement audit dispositif de raccordement (36).

2. Dispositif de retenue de joint à démontage rapide (10, 11) selon la revendication 1, dans lequel ledit dispositif de raccordement (36) comporte un alésage (37) se prolongeant dans la projection (28), une tige (38) positionné à coulissement dans l'alésage (37) et dont une extrémité est reliée à l'organe de serrage (31), et une barre (39) reliée à l'autre extrémité de la tige (38).

3. Dispositif de retenue de joint de démontage rapide (10, 11) selon la revendication 1 ou 2, dans lequel ledit mécanisme de blocage et de déplacement (44) comporte un dispositif (46) destiné à solliciter de façon élastique l'organe de serrage (31) de la première position à la seconde.

4. Dispositif de retenue de joint à démontage rapide selon la revendication 3, dans lequel ledit dispositif de sollicitation élastique (46) comporte un mécanisme de ressort (47) relié à la barre (39) et réagissant contre la projection (28) du bloc de montage (26).

5. Dispositif de retenue de joint à démontage rapide (11) selon l'une quelconque des revendications 1 à 4, dans lequel ledit mécanisme de blocage et de déplacement comporte un support (66) relié au bloc de montage (26), une première bielle de guidage (67) dont une extrémité est articulée sur le support (66), une seconde bielle de guidage (68) dont une extrémité est articulée sur la barre (39) et l'autre sur l'autre extrémité de la première bielle de guidage (67), et un dispositif d'arrêt (69) relié au support (66) destiné à être mis en butée avec l'une (67) des deux bielles de guidage (67, 68).

6. Dispositif de retenue de joint à démontage rapide (11) selon l'une quelconque des revendications 1 à 5, dans lequel lesdites première et seconde bielles de guidage (67, 68) peuvent se déplacer entre une première position dans laquelle ni l'une ni l'autre ne sont en prise avec le dispositif de blocage (69) et le segment de joint (13) est dégagé du socle (12), et une seconde position dans laquelle l'une (67) des deux bielles de guidage (67, 68) est en butée avec le dispositif d'arrêt (69) et le segment de joint (13) est serré entre l'organe de serrage (31) et le socle (12), lesdites première et seconde bielles de guidage (67, 68) passant par un état rectiligne en réponse à leur déplacement de la première à la seconde position.

7. Dispositif de retenue de joint à démontage rapide (11) selon la revendication 6, comportant un dispositif (81) pour faire pivoter la première et la seconde bielles de guidage (67, 68) entre la première et la seconde position, ledit dispositif (81) comprenant un trou (82) dans la première bielle de guidage (67), et un outil (83) muni d'un tenon (84) adapté pour coulisser dans le trou (82).

8. Dispositif de retenue de joint à démontage rapide (11) selon l'une quelconque des revendications 1 à 7, dans lequel ledit outil (83) est pourvu d'une tête (86) et d'un manche (87) articulé sur la tête (86), ledit tenon (84) débordant extérieurement de la tête (86).

9. Dispositif de retenue de joint à démontage rapide (10) selon l'une quelconque des revendications 1 à 8, dans lequel ledit mécanisme de blocage et de déplacement (44) comporte un mécanisme de serrage à came (51) relié au bloc de montage (12) et incluant un organe (54) adapté pour être mis en appui avec la barre (39) du dispositif de raccordement (36).

FIG.1.

FIG.4.

FIG.2.

FIG.5.

0 039 386

FIG.3.

FIG.6.

3